(19) Europäisches Patentamt
European Patent Office
Office européen des brevets

(11) EP 4 534 586 A1

(12) **DEMANDE DE BREVET EUROPEEN**

(43) Date de publication:
**09.04.2025 Bulletin 2025/15**

(21) Numéro de dépôt: **24204435.2**

(22) Date de dépôt: **03.10.2024**

(51) Classification Internationale des Brevets (IPC):
***C08J 3/075*** *(2006.01)* ***C08F 220/06*** *(2006.01)*
***C08J 3/24*** *(2006.01)*

(52) Classification Coopérative des Brevets (CPC):
**C08J 3/075; C08F 220/06; C08J 3/243; C08J 3/245;** C08J 2333/02

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **03.10.2023 FR 2310563**

(71) Demandeurs:
- **Biomanity**
  **31000 Toulouse (FR)**
- **Centre National de la Recherche Scientifique**
  **75016 Paris (FR)**
- **UNIVERSITE DE MONTPELLIER**
  **34090 Montpellier (FR)**
- **Ecole Nationale Supérieure de Chimie de Montpellier**
  **34090 Montpellier (FR)**

(72) Inventeurs:
- **DANIEL, Jean-François, Louis, Albert**
  **75013 PARIS (FR)**
- **DAVID, Ghislain, Claude**
  **34080 MONTPELLIER (FR)**
- **AUVERGNE, Rémi, Léon, Joseph**
  **34570 PIGNAN (FR)**
- **CATROUILLET, Sylvain, Alexandre, Davy**
  **34090 MONTPELLIER (FR)**
- **MORATILLE, Yoanh, Tuan, Didier**
  **34090 MONTPELLIER (FR)**
- **JEMILI, Nouha**
  **34080 MONTPELLIER (FR)**

(74) Mandataire: **IPAZ**
**16, rue Gaillon**
**75002 Paris (FR)**

(54) **PROCÉDÉ DE SYNTHÈSE DE POLYMÈRES SUPER ABSORBANTS (SAP) BIOSOURCÉS**

(57) La présente invention se rapporte au domaine des polymères super absorbants (SAP) et vise plus particulièrement un procédé de synthèse d'un polymère super absorbant (SAP) biosourcé ayant une capacité d'absorption d'eau d'un matériau (WAC) supérieur à 50, ledit procédé comprenant notamment une étape de polymérisation d'acide itaconique suivi d'une étape de post-réticulation du polymère obtenu.

EP 4 534 586 A1

## Description

### Domaine technique

L'invention se rapporte au domaine des polymères super absorbants et vise plus particulièrement un procédé de synthèse d'un polymère super absorbant (SAP) biosourcé ayant une capacité d'absorption d'eau d'un matériau (WAC) supérieur ou égal à 50, ledit procédé comprenant notamment une étape de polymérisation de l'acide itaconique suivi d'une étape de post-réticulation du poly(itaconate) obtenu.

### Etat de l'art

Les polymères super absorbants (SAP) sont des polymères dotés d'une absorption d'eau et d'une capacité de rétention d'eau élevée par rapport à leur masse. Ceux-ci sont alors particulièrement utiles dans de nombreuses applications nécessitant d'absorber ou de retenir de l'eau. A titre d'exemple, dans le domaine de l'agriculture, les SAPs permettent de retenir l'eau dans le sol et améliorer l'irrigation des plantes. Dans le domaine des produits d'hygiène, les SAPs peuvent absorber de grande quantité de liquide, ce qui est particulièrement d'intérêt pour des produits tels que les couches culottes. Enfin, les SAPs trouvent également de nombreux débouchés dans le domaine industriel, par exemple dans la conception de câbles d'étanchéité, mais également pour contrôler l'humidité dans les emballages. Etant donné les propriétés remarquables des SAPs, de nombreuses applications sont donc envisageables.

On peut citer trois types de SAP, à savoir les SAPs d'origine naturelle, semi-synthétique et synthétique. Les SAPs d'origine naturelle sont exclusivement composés de polymères naturels, par exemple de la cellulose ou du chitosan. Les SAPs semi-synthétiques sont basés sur des polymères naturels mélangés avec des SAPs synthétiques. Enfin, les SAPs synthétiques sont issus de monomères pétrosourcés tels que l'acide acrylique, ou l'acrylamide. Toutefois, ces derniers peuvent se révéler être particulièrement toxiques et donc non adaptés pour certaines applications. De plus, les SAPs synthétiques ne sont pas biodégradable et donc non compostable. Enfin, étant issu de l'industrie pétrochimique, leur production est très coûteuse en termes de ressources naturelles et peu écologique.

Il existe donc un besoin pour de nouveaux polymères super absorbants d'origine naturelle ayant une capacité d'absorption en eau (WAC) d'au moins 50. Parmi les monomères biosourcés, non toxiques, l'acide itaconique présente un grand intérêt étant donné ses propriétés.

Il est déjà connu de l'art antérieur, par exemple le brevet FR 3029525, des procédés de synthèse de SAP à partir de l'acide itaconique. Néanmoins, il n'est pas connu de procédé de synthèse à partir d'acide itaconique permettant d'obtenir un SAP présentant une capacité d'absorption en eau (WAC) élevée, à savoir un WAC supérieur ou égal à 50. En effet, la faiblesse des masses molaires des homopolymères d'acide itaconique et les faibles rendement pour obtenir des poly(itaconates) ne permettent pas d'obtenir un SAP ayant les propriétés recherchées.

L'art antérieur nous enseigne l'ajout d'un ou plusieurs réticulants dit « internes » au cours de l'étape de polymérisation, par exemple le di-acrylate de polyéthylène glycol ou le bisacrylamide, mais également l'ajout d'activateurs, tels que le N,N-Dimethyléthanolamine, permettant notamment d'augmenter les masses molaires des homopolymères d'acide itaconique. Toutefois, il n'est pas connu des SAPs biosourcés ayant un WAC supérieur ou égal à 50.

Pour répondre à ce besoin, l'invention propose un procédé de synthèse d'un SAP à partir d'acide itaconique comprenant en complément de l'étape de polymérisation, une étape de post-réticulation pour obtenir un SAP biosourcé et ayant les propriétés recherchées, à savoir un WAC élevé, supérieur ou égal à 50.

### Résumé de l'invention

Ainsi, l'invention concerne un procédé de synthèse d'un polymère super absorbant (SAP) biosourcé ayant un WAC d'au moins 50, ledit procédé comprenant les étapes suivantes :

a. homopolymérisation d'acide itaconique ou copolymérisation d'acide itaconique et d'au moins un monomère choisi parmi un monomère hydrosoluble monomérique ou oligomérique, ledit monomère étant monofonctionnel ou polyfonctionnel, avec au moins une base dans l'eau,

b. post-réticulation de l'homopolymère ou du copolymère obtenu à l'étape précédente avec au moins un réticulant porteur d'au moins deux groupements réactifs avec les fonctions acides de l'homopolymère ou du copolymère obtenu à l'étape précédente.

Cette première étape de polymérisation de l'acide itaconique permet ainsi d'obtenir des polymères (ou poly(acide)) comportant de nombreux groupements d'acides carboxyliques particulièrement d'intérêt lors de l'étape de post-réticulation. L'étape de post-réticulation comprend alors l'ajout d'au moins un réticulant avec les polymères

d'acide itaconique obtenu lors de l'étape de polymérisation, celui-ci portant des groupements aptes à réagir avec lesdits groupements d'acides carboxyliques, permettant la synthèse de SAPs ayant les propriétés recherchées.

L'étape d'homopolymérisation ou de copolymérisation comprend avantageusement l'ajout d'un amorceur et d'un activateur, ledit activateur permettant d'activer l'amorceur pour qu'il se décompose plus rapidement.

Selon un objet particulièrement préféré, l'amorceur est le persulfate de potassium ou le persulfate d'ammonium, et l'activateur est le *N,N,N',N'*-tétraméthyléthylènediamine, également dénommé TMEDA.

Pour améliorer et optimiser la synthèse et les propriétés finales recherchées du SAP, le ratio molaire activateur/amorceur est préférentiellement compris entre 0,1:1 et 1:1 (bornes incluses).

L'étape de polymérisation a) peut donc être une homopolymérisation d'acide itaconique, c'est-à-dire une polymérisation avec uniquement de l'acide itaconique. Alternativement, l'étape de polymérisation a) peut être une copolymérisation d'acide itaconique et d'au moins un autre monomère distinct de l'acide itaconique. Préférentiellement, le co-monomère est choisi parmi un monomère hydrosoluble monomérique ou oligomérique, celui-ci pouvant être monofonctionnel ou polyfonctionnel.

Le co-monomère (ou monomère) est préférentiellement un co-monomère insaturé, biosourcé et copolymérisable avec l'acide itaconique.

Lorsque cette étape de polymérisation comprend l'ajout d'un co-monomère (également dénommé monomère dans l'invention), celui-ci est avantageusement porteur de groupements acides, notamment pour assurer à la fois son caractère hydrophile et réticulable lors de l'étape de post-réticulation.

Les groupements acides peuvent être des groupes acide carboxylique, acide sulfonique et/ou acide phosphonique, et de préférence acide carboxylique.

En d'autres termes, le caractère mono- ou polyfonctionnel du co-monomère concerne préférentiellement des fonctions/groupements acides, de façon particulièrement préférée des fonctions acide carboxylique, acide sulfonique et/ou acide phosphonique, et de façon plus particulièrement préférée des fonctions acide carboxylique.

Selon une forme de réalisation particulièrement préférée, le monomère est différent d'un composé comprenant des fonctions vinyliques ou éthyléniques $-CH=CH_2$ terminales. De tels composés sont par exemple des di-, tri- ou polyacrylates tels que les diacrylates de polyéthylène glycol ou des di-, tri- ou polyacrylamides tels que le bisacrylamide.

Ces composés comprenant des fonctions vinyliques ou éthyléniques $-CH=CH_2$ terminales, également dénommés « réticulants internes », sont bien connus de la littérature et ne sont pas biosourcés.

Le co-monomère est de façon particulièrement préférée un monomère vinylique carboxylé monomérique biosourcé (monofonctionnel ou polyfonctionnel), ou un monomère vinylique carboxylé oligomérique biosourcé (polyfonctionnel).

Le terme « carboxylé » signifie la présence d'au moins une fonction acide carboxylique.

Plus préférentiellement, le monomère vinylique carboxylé monomérique est le monomère de formule Ia ou Ib, ci-après respectivement représentées.

Formule Ia $CH_2=CH-R$

Formule Ib $R'-CH=CH-R$

Dans les formules Ia et Ib, R représente préférentiellement un groupe acide carboxylique ou un groupe hydrocarboné saturé ou insaturé comprenant au moins une fonction acide carboxylique ; et R' représente préférentiellement un groupe hydrocarboné saturé ou insaturé comprenant éventuellement au moins une fonction acide carboxylique.

Le groupement hydrocarboné peut comprendre de 1 à 10 atomes de carbone, et de préférence de 1 à 5 atomes de carbone.

De façon particulièrement préféré, le monomère vinylique carboxylé monomérique est choisi parmi l'acide acrylique, l'acide crotonique, l'acide muconique, l'acide sorbique, l'α-Aceto acrylique, l'acide citraconique, l'acide mésaconique, et l'acide aconitique.

Le monomère vinylique carboxylé oligomérique (polyfonctionnel) est avantageusement un monomère de formule IIa ou IIb, ci-après respectivement représentées.

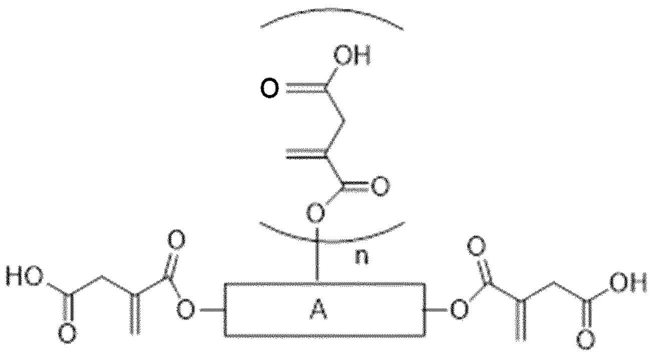

IIa

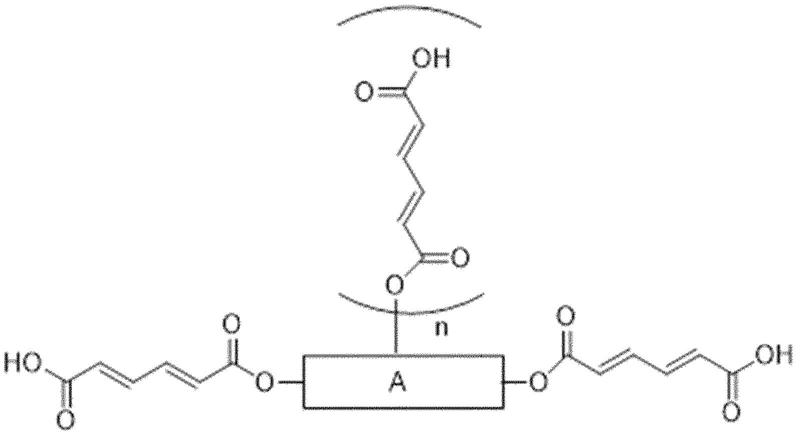

IIb

dans lesquelles A représente un oligomère polyester ou polyéther biosourcé avec n compris entre 0 et 100 (bornes incluses), et préférentiellement entre 2 et 20 (bornes incluses).

A est préférentiellement un radical aliphatique.

Plus préférentiellement, le monomère vinylique carboxylé oligomérique (polyfonctionnel) est choisi parmi le polyitaconate, le polycitraconate, et le polymésaconate, et encore plus préférentiellement le polyitaconate.

Cette étape de polymérisation de l'acide itaconique comprend, en outre, l'ajout d'une base, celle-ci est préférentiellement choisie parmi NaOH, KOH, $NH_4OH$ ainsi que leur combinaison.

De façon préférée, le monomère d'acide itaconique présente une concentration massique comprise entre 30% et 150% (bornes incluses) par rapport à la masse totale de précurseurs du polymère ou du copolymère (acide itaconique, et co-monomère s'il est présent), solvants et réactifs mis en oeuvre dans l'étape a).

Une fois, la polymérisation terminée, ces polymères d'acide itaconique ou poly(itaconate) obtenus sont alors réticulés par une étape supplémentaire de post-réticulation permettant d'augmenter la capacité de rétention d'eau (WAC) du polymère super absorbant.

A cet effet, la post-réticulation est mise en oeuvre au moyen d'au moins un réticulant. Préférentiellement, pour optimiser la réaction, le réticulant est présent entre 0,5 et 20% molaire (bornes incluses) par rapport à l'acide itaconique, et plus préférentiellement entre 1 et 10% molaire (bornes incluses) par rapport à l'acide itaconique.

Selon un objet préféré, le réticulant comprend au moins un groupement réactif, celui-ci est choisi parmi le groupe époxy, vinyl éther, β-hydroxyalkylamide, hydroxy éthyl amide, et oxazoline, et de façon particulièrement préférée le groupe époxy.

Plus préférentiellement, le groupement époxy est le composé de formule IIIA ou IIIB, ci-après respectivement représentées.

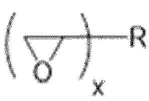

$(III_A)$

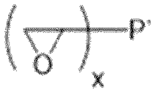

$(III_B)$

Dans les formules IIIA et IIIB, x est de préférence supérieur ou égal à 2.

Plus préférentiellement, R est un radical biosourcé au moins divalent monomérique, P' est un radical biosourcé au moins divalent oligomérique ou polymérique, et encore plus préférentiellement R est un radical au moins divalent monomérique aliphatique, P' est un radical au moins divalent oligomérique ou polymérique aliphatique.

x désigne le nombre de fonctions époxyde au sein du réticulant biosourcé de formule (IIIA) ou (IIIB).

Dans l'invention, un radical aliphatique est un radical hydrocarboné à chaîne ouverte (linéaire ou ramifiée), comprenant éventuellement un ou plusieurs cycles non-aromatiques. Le radical aliphatique peut être saturé ou insaturé, et de préférence saturé.

Selon une forme de réalisation préférée de l'invention, le radical R (respectivement P') comprend un ou plusieurs hétéroatomes choisis parmi un atome d'oxygène, un atome d'azote, et un de leurs mélanges.

Selon une forme de réalisation préférée de l'invention, le radical R (respectivement P') comprend de 2 à 17 atomes de carbone, et de façon plus particulièrement préférée de 3 à 6 atomes de carbone.

De façon particulièrement préférée, le réticulant utilisé est un polyglycerol polyglycidyl ether, dont certains sont également connus sous le nom DENACOL®, par exemple le DENACOL® EX-521 ou DENACOL® EX-314.

L'étape de réticulation peut également comprendre l'ajout d'au moins un biopolymère porteur de fonctions acides, préférentiellement des groupements d'acides carboxyliques, ceci ayant pour effet de moduler les propriétés physico chimique des SAPs.

Plus préférentiellement, ce biopolymère est choisi parmi les alginates, l'acide hyaluronique, les Glycosaminoglycanes (GAG), les protéoglycanes, les glycoprotéines, les pectines, et les celluloses oxydées.

Selon une variante de l'invention, le procédé peut comprendre une étape supplémentaire de précipitation après l'étape a) de polymérisation, pour obtenir les polymères d'acide itaconique sous forme de poudre.

Dans ce contexte, le précipitant est préférentiellement un solvant choisi parmi l'acétone, l'éthanol, et le 1-méthoxy-2-propanol.

D'autres caractéristiques et avantages ressortiront de la description détaillée de l'invention et des exemples qui vont suivre.

## Description détaillée de l'invention

Définitions

Par « acide itaconique » au sens de l'invention, on entend la molécule représentée par la formule suivante :

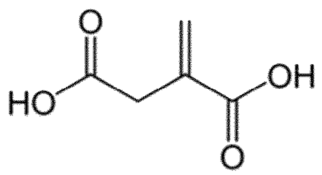

Par « poly(acide) » au sens de l'invention, on entend un polymère obtenu par polymérisation d'un acide, par exemple de l'acide itaconique.

Par « activateur » au sens de l'invention, on entend une molécule présentant au moins deux fonctions amines. Il peut s'agir préférentiellement du *N,N,N',N'*-tétraméthyléthylènediamine ou TMEDA, de formule suivante :

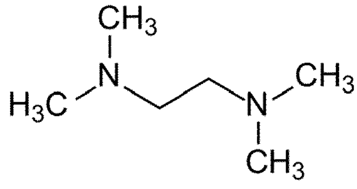

Par « amorceur » au sens de l'invention, on entend une molécule chimique capable de générer des radicaux par activation thermique, photochimique ou rédox, par exemple le persulfate de potassium ou le persulfate d'ammonium.

Par « réticulant » au sens de l'invention, on entend une molécule chimique capable de réticuler c'est-à-dire de former un réseau tridimensionnel par la création de liaisons chimiques entre les chaînes macromoléculaires. Préférentiellement, le réticulant est porteur de groupement réactif avec des fonctions acides, plus préférentiellement le réticulant est porteur de groupements époxy, et encore plus préférentiellement le réticulant est un polyglycérol polyglycidyl éther, par exemple le DENACOL®, tel que le DENACOL® EX-521 ou le DENACOL® EX-314.

Par « biosourcé » au sens de l'invention, on entend une molécule (ou un ensemble de molécules) obtenue par extraction de la biomasse (par exemple : la cellulose) ou obtenue par des réactions appliquées à la biomasse (par exemple : glycérol issu de l'estérification de triglycérides). Dans l'invention, le SAP est biosourcé. En d'autres termes, il est issu de la biomasse ou de matières premières d'origine végétale et/ou animale, de préférence animale (et non d'origine fossile ou pétrochimique). Il est en particulier obtenu par extraction de la biomasse ou de matières premières d'origine végétale et/ou animale, de préférence animale ou obtenu par des réactions appliquées à la biomasse ou à des matières premières d'origine végétale et/ou animale, de préférence animale.

Par opposition, un produit "d'origine fossile ou pétrochimique" correspond à tout produit fabriqué au moins partiellement à partir de composés organiques issus du pétrole ou du charbon ou des dérivés du pétrole ou du charbon.

En d'autres termes, au moins le ou les comonomères (s'il y en a plusieurs) mis en oeuvre dans l'étape a) et le réticulant mis en oeuvre dans l'étape b) sont biosourcés (l'acide itaconique est également biosourcé) ; et de préférence tous les précurseurs permettant de former ledit polymère super absorbant de l'invention (i.e. tout précurseur dudit polymère ou copolymère réticulé super absorbant de l'invention) sont biosourcés.

Dans l'invention, les précurseurs dudit polymère désignent des monomères ou tout autre composé (e.g. de type réticulant) dont au moins une partie de la structure se retrouve dans la structure dudit polymère obtenu.

Un produit d'origine biosourcé peut être différencié d'un produit synthétisé à partir de matières premières fossiles ou pétrochimique par les méthodes décrites dans la norme ASTM D6866.

Par hydrosoluble, on entend dans la présente invention, un monomère soluble dans l'eau de préférence sous sa forme ionisée, à 25°C.

Procédé selon l'invention

La présente invention a donc pour objet un procédé de synthèse d'un polymère super absorbant (SAP) biosourcé ayant un WAC d'au moins 50 comprenant les étapes suivantes :

a. Homopolymérisation d'acide itaconique ou copolymérisation d'acide itaconique et d'au moins un monomère choisi parmi un monomère hydrosoluble monomérique et oligomérique, monofonctionnel et polyfonctionnel, avec au moins une base dans l'eau,

b. Post-réticulation de l'homopolymère ou du copolymère obtenu à l'étape précédente avec un réticulant porteur d'au moins de deux groupements réactifs avec les fonctions acides de l'homopolymère ou du copolymère obtenu à l'étape précédente.

Selon une forme de réalisation préférée de l'invention, l'étape a) (et en particulier le procédé) ne met pas en oeuvre de réticulation en présence d'un réticulant dit « interne ». Dans le cas de l'homopolymérisation, l'acide itaconique réagit par polymérisation radicalaire avec lui-même. Dans le cas de la copolymérisation, l'acide itaconique réagit préférentiellement par polymérisation radicalaire avec le co-monomère. Le caractère mono- ou polyfonctionnel du co-monomère concerne préférentiellement des fonctions acides, et de façon particulièrement préférée des fonctions acide carboxylique.

En d'autres termes, l'étape a) (et en particulier le procédé) ne met pas en oeuvre de composés comprenant des fonctions vinyliques ou éthyléniques $-CH=CH_2$ terminales. De tels composés sont par exemple des di-, tri- ou polyacrylates tels que les diacrylates de polyéthylène glycol ou des di-, tri- ou polyacrylamides tels que le bisacrylamine. Ces composés comprenant des fonctions vinyliques ou éthyléniques $-CH=CH_2$ terminales, également dénommés « réticulants internes », sont bien connus de la littérature et ne sont pas biosourcés.

La première étape a) consiste donc à polymériser ou copolymériser l'acide itaconique, dans l'eau, partiellement ou totalement par diverses bases, lesdites bases étant préférentiellement choisies parmi NaOH, KOH, $NH_4OH$, et leur combinaison.

Selon un objet de l'invention, la polymérisation a) est une copolymérisation. Dans ce contexte, le co-monomère n'est pas de l'acide itaconique, préférentiellement le co-monomère est alors un co-monomère insaturé, biosourcé et copolymérisable avec l'acide itaconique. Préférentiellement, ledit co-monomère est porteur de groupements acides pour assurer à la fois son caractère hydrophile et réticulable lors de l'étape b) de post-réticulation.

Ces co-monomères peuvent-être utilisés ensemble ou séparément. Préférentiellement, le co-monomère est choisi parmi un monomère hydrosoluble monomérique ou oligomérique, monofonctionnel ou polyfonctionnel, et leur combinaison.

Plusieurs types de co-monomères peuvent ainsi être utilisés, ils peuvent être monomériques monofonctionnels ou polyfonctionnels, ou oligomériques monofonctionnels ou polyfonctionnels.

Lorsque la polymérisation est une co-polymérisation, le comonomère peut représenter entre 0 et 20% molaire (bornes incluses), par rapport au nombre de moles d'acide itaconique et de co-monomère(s), et préférentiellement entre

0,1 et 15% molaire (bornes incluses), par rapport au nombre de moles d'acide itaconique et de co-monomère(s).

Selon un objet de l'invention particulièrement préféré, le co-monomère est un monomère vinylique carboxylé monofonctionnel biosourcé ou un monomère vinylique carboxylé polyfonctionnel biosourcé.

Plus préférentiellement, le co-monomère est un monomère vinylique carboxylémonomérique, encore plus préférentiellement un monomère de formule Ia ou Ib ci-après représentées.

Formule Ia $CH_2$=CH-R

Formula Ib R'-CH=CH-R

Dans les formules Ia et Ib, R représente préférentiellement un groupe acide carboxylique ou un groupe hydrocarboné saturé ou insaturé comprenant au moins une fonction acide carboxylique ; et R' représente préférentiellement un groupe hydrocarboné saturé ou insaturé comprenant éventuellement au moins une fonction acide carboxylique.

Le groupement hydrocarboné peut comprendre de 1 à 10 atomes de carbone, et de préférence de 1 à 5 atomes de carbone.

Les groupements R et R' ci-dessus représentés peuvent être identiques ou différents et peuvent être des groupes hydrophiles ou hydrodiluables porteurs d'hétéroéléments tels que O, N, S, P, et de préférence d'atome(s) d'oxygène.

De façon encore plus préférée, le co-monomère est un monomère vinylique carboxylé monomérique choisi parmi l'un des co-monomères listés dans le tableau 1, ci-après.

**TABLEAU 1**

| Nom | STRUCTURE |
|---|---|
| Acide acrylique | 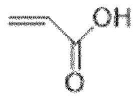 |
| Acide crotonique | 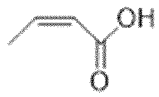 |
| Acide muconique | 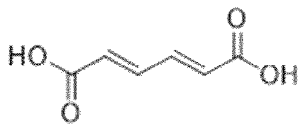 |
| Acide sorbique | 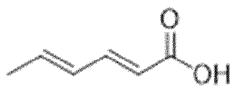 |
| α-Aceto acrylique | 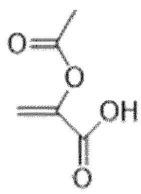 |
| Acide citraconique | 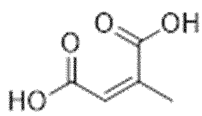 |
| Acide mésaconique | 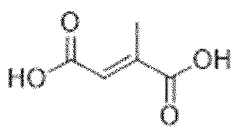 |

(suite)

| Nom | STRUCTURE |
|---|---|
| Acide aconitique | 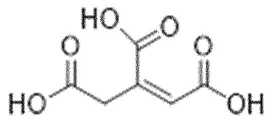 Cis- 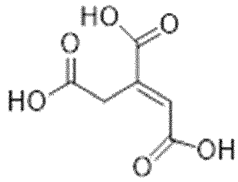 Trans- |

Alternativement, le co-monomère peut être un monomère vinylique carboxylé oligomérique polyfonctionnel. Ils peuvent être de type poly(itaconate) de formule IIa ci-après représentée ou de type poly isomères d'itaconate, par exemple le polycitraconate ou le polymésaconate, ou encore de type polymuconique de formule IIb ci-après représentée.

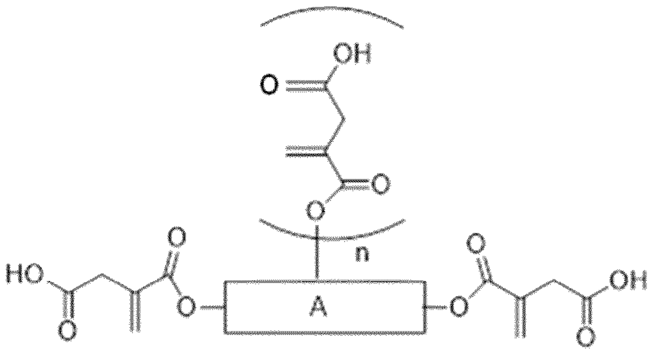

IIa

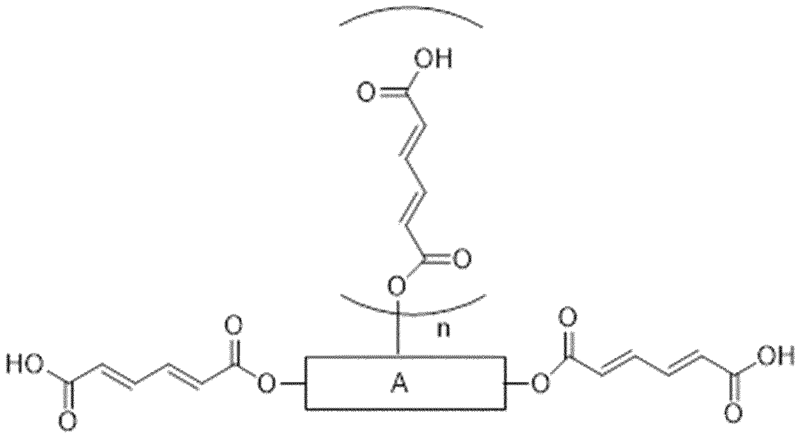

IIb

Le groupement A est un oligomère polyester ou polyéther biosourcé avec n compris entre 0 et 100 (bornes incluses), et plus préférentiellement entre 2 et 20 (bornes incluses).

A titre d'exemple, le polyester peut être obtenu par polycondensation non stoechiométrique d'un diacide et d'un diol en excès permettant d'obtenir un oligoester comprenant au moins un groupement hydroxy, ou d'un diacide et d'un di époxy en excès permettant d'obtenir un oligoester comprenant au moins un groupement époxy. La fonctionnalisation de ces oligoesters peut être mise en oeuvre, selon les connaissances de l'homme du métier, par exemple par la méthode dites « one pot », par addition soit d'anhydride itaconique (pour les oligoesters hydroxy) soit d'acide itaconique (pour les oligoesters époxy).

Des polyéthers diols ou des polyéthers polyols peuvent également être utilisés, tel que le polyglycérol, par exemple préparés par polyéthérification de diol biosourcé (tel que le butane diol). Ces polyéthers terminés hydroxy peuvent être fonctionnalisés par l'anhydride itaconique.

Des polyéthers terminés époxy peuvent également être utilisés tels que le polyglycidylether du glycérol, du sorbitol, diglycidylether du 1,3-propane, du 1,4-butane, de l'isorbide, après fonctionnalisation par l'acide itaconique.

Ainsi, l'étape de polymérisation a) du procédé selon l'invention est soit une homolymérisation, c'est-à-dire une

polymérisation avec l'acide itaconique seul, soit une co-polymérisation, c'est-à-dire la polymérisation de l'acide itaconique en présence de co-monomères. L'acide itaconique, après solubilisation préférentiellement dans l'eau basique, est polymérisé en particulier à une concentration massique entre 30 et 150% massique (bornes incluses) par rapport à la masse totale de précurseurs du polymère ou du copolymère (acide itaconique, et co-monomère s'il est présent), solvants et réactifs mis en oeuvre dans l'étape a).

Cette étape de polymérisation est préférentiellement mise en oeuvre en présence d'un amorceur et d'un activateur. Ledit amorceur est avantageusement choisi parmi le persulfate de potassium et le persulfate d'ammonium, plus préférentiellement entre 0,5 et 5% molaire (bornes incluses) par rapport au monomère acide itaconique. L'activateur est préférentiellement le N,N,N',N'-tétraméthyléthylènediamine (TMEDA).

Selon un autre objet préféré, le ratio molaire activateur : amorceur est compris entre 0,1 :1 et 1 :1 (bornes incluses).

L'étape de polymérisation est également préférentiellement mise en oeuvre à une température comprise entre 20°C et 100°C (bornes incluses) pendant une durée comprise entre 30 minutes et 7 heures (bornes incluses).

Lorsque la polymérisation est une co-polymérisation, des quantités variables de co-monomères de formule la ou Ib et/ou de formule IIa ou IIb peuvent être utilisées, celles-ci sont préférentiellement comprises entre 0 et 20% molaire (bornes incluses), par rapport au nombre de moles d'acide itaconique et de comonomère(s), et préférentiellement entre 0,1 et 15% molaire (bornes incluses) par rapport au nombre de moles d'acide itaconique et de comonomère(s).

Selon un mode de réalisation particulièrement préféré, l'amorceur est le persulfate d'ammonium et l'activateur est le N,N,N',N'-tétraméthyléthylènediamine (TMEDA).

A titre d'exemple, l'homopolymérisation ainsi que la copolymérisation sont réalisées de préférence en présence de persulfate d'ammonium à 1,3% molaire par rapport au monomère, de TMEDA à un ratio molaire TMEDA/ persulfate d'ammonium de 0,5 : 1, à 60°C, pendant 3,5 heures.

Selon une variante de l'invention, le procédé peut comprendre, en outre, une étape de précipitation après l'étape de polymérisation. Ainsi, à l'issue de la polymérisation, le polymère obtenu est alors préférentiellement précipité dans un solvant, tels que l'acétone, l'éthanol ou le 1-méthoxy-2-propanol pour obtenir le polymère sous forme de poudre.

Une fois l'étape de polymérisation terminée, avec ou sans étape de précipitation, le polymère obtenu est destiné à être réticulé pour obtenir un SAP ayant les propriétés recherchées.

Lorsque, le procédé selon l'invention comprend une étape supplémentaire de précipitation, permettant d'obtenir un polymère sous forme de poudre, l'étape de post-réticulation comprend une première étape additionnelle de solubilisation en milieu aqueux du polymère sous forme de poudre. A l'inverse, la post-réticulation est mise en oeuvre directement à partir du polymère obtenu à la fin de l'étape a) de polymérisation.

La seconde étape du procédé selon l'invention vise donc à réticuler les polymères obtenues lors de la première étape (ou poly(acide)) en présence ou non de biopolymères porteurs également de fonctions acides. Ainsi, selon un objet de l'invention, l'étape de réticulation comprend avantageusement l'ajout d'au moins un biopolymère porteur de fonctions acides.

Les biopolymères utilisés peuvent être de différent types, soit ce sont des biopolymères directement porteurs de fonctions acides, par exemple les alginates, l'acide hyaluronique, les Glycosaminoglycanes (GAG), les protéoglycanes, les glycoprotéines, ou les pectines, soit ce sont des biopolymères modifiés, connus de l'homme du métier, porteurs de groupes acides tel que la cellulose oxydée.

Ainsi, préférentiellement, le biopolymère est choisi parmi les alginates, l'acide hyaluronique, les Glycosaminoglycanes (GAG), les protéoglycanes, les glycoprotéines, les pectines, et les celluloses oxydées.

Ces biopolymères porteurs de fonctions acides vont également participer à la post-réticulation du polyacide itaconique, lui-même porteur de groupes acides. L'utilisation de ces biopolymères porteurs de fonctions acides permet notamment de moduler les propriétés physico chimique des SAPs, d'augmenter le WAC final, et donc de diversifier leurs applications.

En effet, la post réticulation, nécessite des composés porteurs de groupements réagissant avec les fonctions acides du polymère obtenu lors de la première étape, de tels composés sont préférentiellement des réticulants.

Ainsi, selon un objet particulièrement préféré de l'invention, le groupement réactif porté par le réticulant est choisi parmi le groupe époxy, vinyl éther, hydroxy éthyl amide, et oxazoline, et de façon particulièrement préférée le groupe époxy.

Etant donné ses connaissances générales, l'homme du métier sait choisir le réticulant comprenant ou non ces groupements en fonction des réactivités particulières recherchées et des conditions de post-réticulation (température etc.)

Toutefois, selon un objet particulièrement préféré, le réticulant comprend comme groupement réactif un groupe époxy, étant donné sa réactivité avec les fonctions acide à température moyenne et leur coût.

Plus préférentiellement, le réticulant comprenant des groupes réactifs époxy est le composé de formule IIIa ou IIIb, avec x supérieur ou égal à 2, ci-après respectivement représentés.

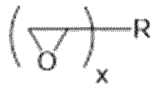

$(III_A)$

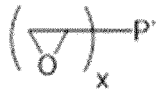

$(III_B)$

Plus préférentiellement, R est un radical biosourcé au moins divalent monomérique, P' est un radical biosourcé au moins divalent oligomérique ou polymérique, et encore plus préférentiellement R est un radical au moins divalent monomérique aliphatique, P' est un radical au moins divalent oligomérique ou polymérique, aliphatique.

x désigne le nombre de fonctions époxyde au sein du réticulant biosourcé de formule (IIIA) ou (IIIB).

Dans l'invention, un radical aliphatique est un radical hydrocarboné à chaîne ouverte (linéaire ou ramifiée), comprenant éventuellement un ou plusieurs cycles non-aromatiques. Le radical aliphatique peut être saturé ou insaturé, et de préférence saturé.

Selon une forme de réalisation préférée de l'invention, le radical R (respectivement P') comprend un ou plusieurs hétéroatomes choisis parmi un atome d'oxygène, un atome d'azote, et un de leurs mélanges.

Selon une forme de réalisation préférée de l'invention, le radical R (respectivement P') comprend de 2 à 17 atomes de carbone, et de façon plus particulièrement préférée de 3 à 6 atomes de carbone.

A titre d'exemple, la synthèse d'oligodiépoxys ou de polyépoxys biosourcés (V) est réalisée selon le procédé de polycondensation non stoechiométrique d'un di- ou poly époxys monomérique (IIIA) 100% biosourcé ou d'un di- ou poly époxys oligomériques (IIIB) avec soit des di- ou poly acides monomériques biosourcés (IVA) soit des di- ou poly acides oligomériques (IVB), ci-après représentés.

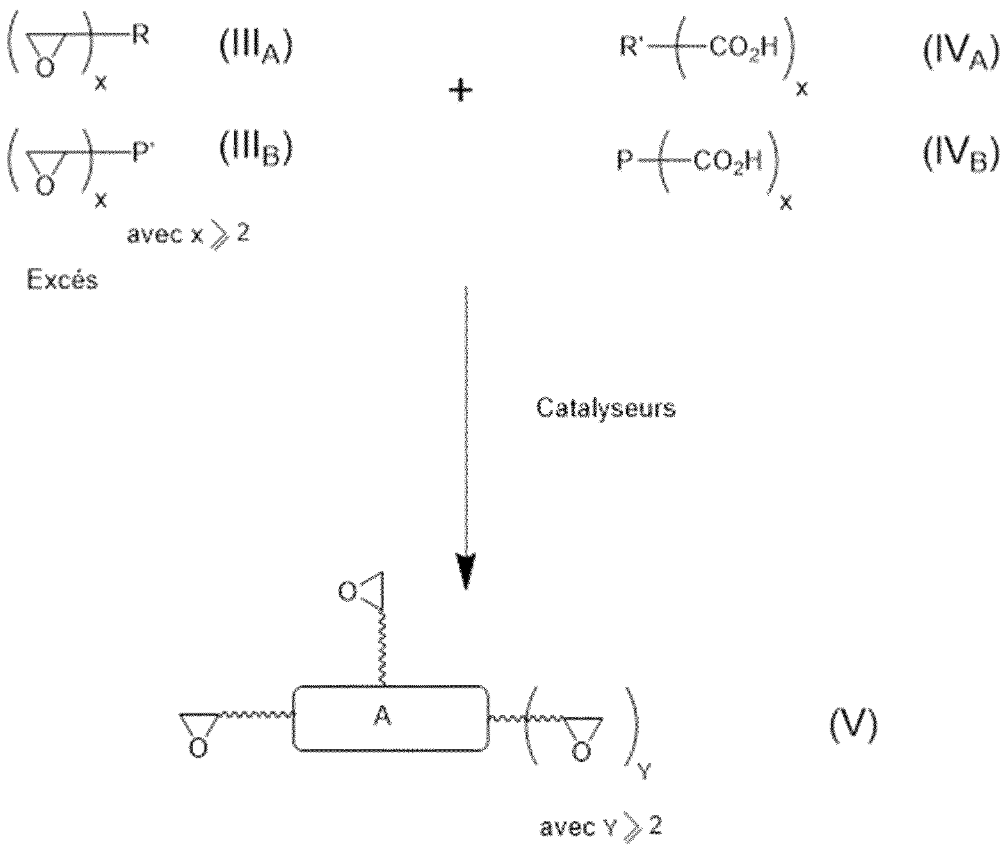


Le composé de formule IIIa peut être, par exemple, un di ou polyglycidyléther de glycérol, du sorbitol, un diglycidyléther du butane diol, du propane diol, en de l'isosorbide.

Le polyacide biosourcé de formule (IVa) est très préférentiellement un poly(itaconate) obtenu à partir de l'acide itaconique.

Le composé de formule (V) peut être obtenu selon la loi de Flory, en jouant sur l'excès de diépoxy monomérique (IIIa) ou oligomérique (IIIb) par rapport au di- ou poly acides oligomériques (IVa, IVb). La réaction suivante illustre la

réaction entre un diépoxy monomérique et un diacide monomérique, ce qui permet de faire varier la distance entre les deux groupes époxy et donc les caractéristiques physico-chimiques des SAP obtenus.

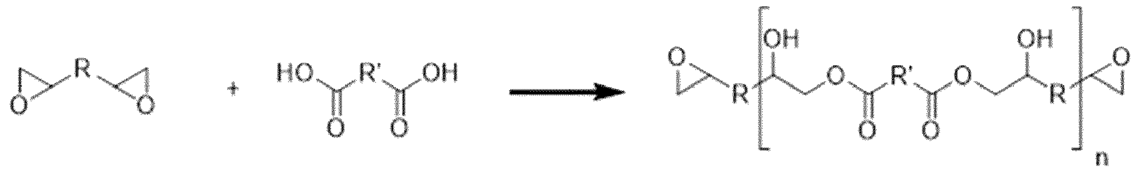

R est préférentiellement un radical polyéther biosourcé (i.e. comprenant plusieurs fonctions éther), ledit radical polyéther biosourcé pouvant comprendre en outre une ou plusieurs fonctions hydroxyle (-OH). R est préférentiellement un radical aliphatique. R comprend préférentiellement de 2 à 17 atomes de carbone, et de façon plus particulièrement préférée de 3 à 6 atomes de carbone.

R' est préférentiellement un radical alkylène ou alkénylène biosourcé comprenant de 2 à 15 atomes de carbone, et de façon plus particulièrement préférée de 3 à 6 atomes de carbone.

De façon encore plus préférée, le réticulant utilisé répond à la formule suivante (DENACOL) :

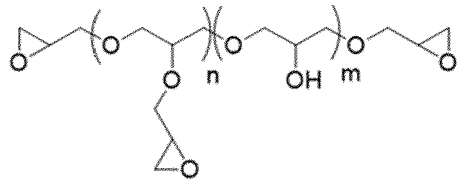

De préférence, $0 \leq n \leq 5$, et de préférence encore $0 \leq n \leq 3$, et

De préférence, $0 \leq m \leq 5$, et de préférence encore $0 \leq m \leq 3$.

Le réticulant est préférentiellement présent entre 0,5 et 20% molaire (bornes incluses) par rapport à l'acide itaconique, plus préférentiellement entre 1 et 10% molaire (bornes incluses) par rapport à l'acide itaconique.

L'étape de post-réticulation peut également comprendre l'ajout d'un catalyseur, celui-ci est présent entre 0 et 5 % molaire (bornes incluses) par rapport au réticulant, et de préférence entre 0,1 et 5 % molaire (bornes incluses) par rapport au réticulant. Les catalyseurs utilisés peuvent être des amines tertiaires hydrosolubles ; ou en milieux basique être par exemple NaOH ou KOH avec un pH > 7. Lorsqu'un catalyseur est ajouté, le milieu est préférentiellement porté à 60°C pendant 30 min sous agitation avant de prolonger la post-réticulation dans un récipient clos dans l'étuve à 60°C.

Un polymère super absorbant présentant un WAC d'au moins 50 est alors obtenu.

L'efficacité absorbante des polymères super absorbants synthétisés selon le procédé de l'invention peut être évaluée par la capacité d'absorption d'eau d'un matériau ou WAC (Water Absorption Capacity).

Le WAC est donc la capacité d'absorption d'eau d'un matériau, celle-ci est exprimé en gramme d'eau par gramme d'échantillon. La détermination des WAC est réalisée suivant différentes normes selon la nature du matériau testé (textile, matériau de construction, plastique). La norme relative aux plastiques est la norme NF EN ISO 62 / ASTM D570. Celle-ci ainsi s'applique préférentiellement pour le SAP de l'invention.

En particulier, la méthode concernant les polymères super absorbants consiste à introduire une masse connue (en g) (m1) de polymère sec (par exemple 1g) dans 500 fois le volume d'eau de m1 (en ml) (par exemple 500 ml d'eau pour 1g) et laisser pendant 24 heures le polymère absorber l'eau. Ensuite le gel obtenu est filtré puis pesé pour obtenir une masse m2 (en g).

Le WAC est calculé selon la formule, ci-après.

$$WAC = \frac{m2 - m1}{m1}$$

Dans la présente invention, on entend par un « état sec » d'un polymère ou un « polymère sec », une teneur dudit polymère en eau résiduelle d'au plus 30% en masse environ, de préférence d'au plus 20% en masse environ, et de façon particulièrement préférée d'au plus 10% en masse environ, par rapport à la masse totale de polymère et d'eau résiduelle. La teneur peut être mesurée à l'aide d'une analyse thermogravimétrique.

L'invention est à présent illustrée par des exemples non limitatifs du procédé selon l'invention et par des résultats.

## Exemples

Exemple 1 - Homopolymérisation de l'acide itaconique

Une solution est préparée avec 150mL d'eau distillée, et 46,15g de soude. Celle-ci est préparée dans un bain de glace pour éviter une chaleur excessive. L'acide itaconique (150g) est ensuite rajouté dans la solution de soude pour neutralisation. Cette étape est également effectuée sous bain de glace. Le mélange obtenu est introduit dans un réacteur, et placé sous bullage d'azote pendant 30min, le temps d'élever la température à 60°C. Le persulfate de potassium $K_2S_2O_8$ (4,05g, solide) ainsi que le TMEDA (1,74g, liquide) sont introduits dans le réacteur pour initier la polymérisation. L'agitation est fixée à 250 tours par minute. Après 3h30 de synthèse le milieu est très visqueux, et l'agitation mécanique n'est plus efficace. 225mL d'eau sont ensuite introduits pour faciliter le dépotage du réacteur et une température de 60°C sous agitation à 250rpm sont maintenues le temps d'observer la diminution de la viscosité pour permettre la précipitation goutte à goutte dans l'éthanol pour un ratio eau/éthanol de 1/10.

Le polymère obtenu est ensuite séché à l'étuve. La masse molaire obtenue est 37000 g.mol-1.

Exemple 2 - Copolymérisation de l'acide itaconique

Une solution est préparée avec 10mL d'eau distillée, et 2,801g de soude. Celle-ci est préparée dans un bain de glace pour éviter une chaleur excessive. L'acide itaconique (9,110g ; 0,070 moles) est ensuite rajouté dans la solution de soude pour neutralisation. Cette étape est également effectuée sous bain de glace. Le mélange obtenu est introduit dans un réacteur, l'acide acrylique (0,890g ; 0,012 moles) est ajouté et placé sous bullage d'azote pendant 30min, le temps d'élever la température à 80°C. Le persulfate de potassium $K_2S_2O_8$ (0,270g, solide) ainsi que le TMEDA (0,124g, liquide) sont introduits dans un ballon pour initier la polymérisation. Après 3h de synthèse le milieu est très visqueux, et l'agitation n'est plus efficace. 15mL d'eau sont ensuite introduits pour faciliter le dépotage du ballon et une température de 60°C sous agitation sont maintenues le temps d'observer la diminution de la viscosité pour permettre la précipitation goutte à goutte dans l'éthanol pour un ratio eau/éthanol de 1/10.

Le polymère obtenu est ensuite séché à l'étuve. La masse molaire obtenue est de 18000 g.mol-1.

Exemple 3 - Post-réticulation de l'homopolymère obtenu selon l'exemple 1

5 g d'un homopolymère de poly(itaconate) selon l'exemple 1 sont introduits dans un ballon de 50 mL. Sont ensuite ajoutés 10 mL d'eau distillée dans le ballon. Le tout est solubilisé pendant 1 h sous agitation magnétique à 60°C. L'agent réticulant DENACOL® EX-314 est introduit dans le ballon à hauteur de 0,246 g, l'agitation et la température sont maintenues pendant 30 min afin de garantir une bonne homogénéité du mélange. Ensuite, le mélange réactionnel est coulé dans des moules en silicone qui sont placés dans un cristallisoir muni d'un bécher rempli d'eau distillée. Le cristallisoir est emballé dans du film aluminium et placé en étuve pour une durée de 48 h à 60°C. Les gels ainsi obtenus sont lyophilisés pendant 12 h afin d'éliminer les traces d'eau résiduelle.

Le SAP alors obtenu présente un WAC de 93.

Exemple 4 - Post-réticulation du copolymère obtenu selon l'exemple 2

5 g d'un homopolymère de poly(itaconate) de sodium de masse molaire 18 000 g.mol-1sont introduits dans un ballon de 50 mL. Sont ensuite ajoutés 10 mL d'eau distillée dans le ballon. Le tout est solubilisé pendant 1 h sous agitation magnétique à 60°C. L'agent réticulant DENACOL EX-314 est introduit dans le ballon à hauteur de 0.493 g, l'agitation est maintenue pendant 30 min afin de garantir une bonne homogénéité du mélange. Ensuite, le mélange réactionnel est prelevé dans des seringues qui sont placées en étuve pour une durée de 15 h à 60°C.

Le SAP alors obtenu présente un WAC de 72.

## Revendications

**1.** Procédé de synthèse d'un polymère super absorbant (SAP) biosourcé, ledit SAP a une capacité d'absorption d'eau (WAC) d'au moins 50, **caractérisé en ce que** ledit procédé comprend les étapes suivantes :

a. Homopolymérisation d'acide itaconique ou copolymérisation d'acide itaconique et d'au moins un monomère choisi parmi un monomère hydrosoluble monomérique ou oligomérique, ledit monomère étant monofonctionnel ou polyfonctionnel, avec au moins une base dans l'eau,

b. Post-réticulation de l'homopolymère ou du copolymère obtenu à l'étape précédente avec au moins un

réticulant porteur d'au moins deux groupements réactifs avec les fonctions acides de l'homopolymère ou du copolymère obtenu à l'étape précédente,

tous les précurseurs permettant de former ledit polymère super absorbant sont biosourcés, et

la capacité d'absorption d'eau (WAC) est obtenue en introduisant une masse connue m1 de polymère sec dans 500 fois le volume d'eau de m1, en laissant pendant 24 heures le polymère absorber l'eau, en filtrant le gel obtenu puis en le pesant pour obtenir une masse m2, le WAC correspondant à la valeur du rapport (m2-m1)/m1.

2. Procédé de synthèse selon la revendication précédente, **caractérisé en ce que** l'étape d'homopolymérisation ou de copolymérisation comprend également l'ajout d'un amorceur et d'un activateur.

3. Procédé de synthèse selon la revendication 2, **caractérisé en ce que** le ratio molaire activateur/amorceur est compris entre 0,1 :1 et 1 :1.

4. Procédé de synthèse selon l'une des revendications précédentes, **caractérisé en ce que** le groupement réactif porté par le réticulant est choisi parmi le groupe époxy, vinyl éther, hydroxy éthyl amide, et oxazoline, et de préférence le groupe époxy.

5. Procédé de synthèse selon l'une des revendications précédentes, caractérisé le réticulant est un polyglycérol polyglycidyl éther.

6. Procédé de synthèse selon l'une des revendications précédentes, caractérisé le réticulant est présent entre 0,5 et 20% molaire par rapport à l'acide itaconique, et préférentiellement entre 1 et 10% molaire.

7. Procédé de synthèse selon l'une des revendications précédentes, **caractérisé en ce que** l'étape de réticulation comprend également l'ajout d'au moins un biopolymère porteur de fonctions acides.

8. Procédé de synthèse selon la revendication 7, **caractérisé en ce que** le biopolymère est choisi parmi les alginates, l'acide hyaluronique, les Glycosaminoglycanes (GAG), les protéoglycanes, les glycoprotéines, les pectines, et les celluloses oxydées.

9. Procédé de synthèse selon l'une des revendications précédentes, **caractérisé en ce que** le monomère est différent d'un composé comprenant des fonctions vinyliques ou éthyléniques $-CH=CH_2$ terminales.

10. Procédé de synthèse selon l'une des revendications précédentes, **caractérisé en ce que** le monomère est un co-monomère insaturé, biosourcé et copolymérisable avec l'acide itaconique.

11. Procédé de synthèse selon l'une des revendications précédentes, **caractérisé en ce que** le co-monomère de l'étape a) est un monomère vinylique carboxylé monomérique biosourcé ou un monomère vinylique carboxylé oligomérique biosourcé.

12. Procédé de synthèse selon l'une quelconque des revendications précédentes, **caractérisé en ce que** le monomère est un monomère vinylique carboxylé monomérique biosourcé choisi parmi l'acide acrylique, l'acide crotonique, l'acide muconique, l'acide sorbique, l'α-Aceto acrylique, l'acide citraconique, l'acide mésaconique, et l'acide aconitique ; ou un monomère vinylique carboxylé oligomérique biosourcé de formule :

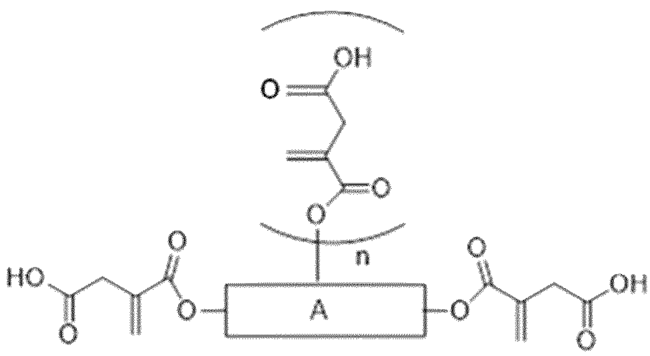

IIa

,

ou

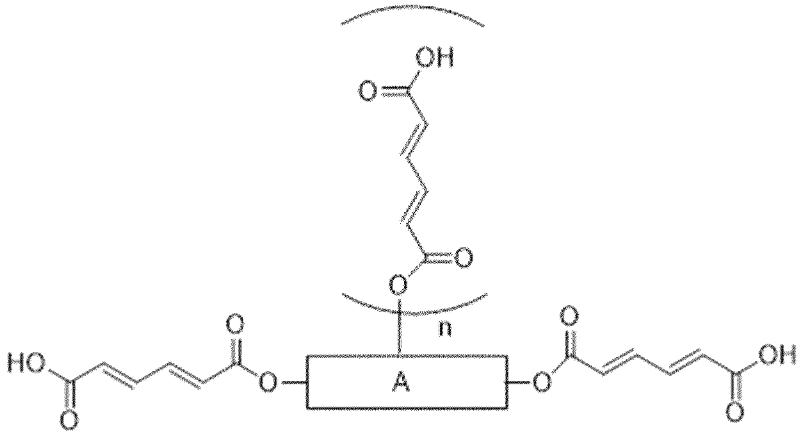

IIb

dans lesquelles A représente un oligomère polyester ou polyéther biosourcé avec n compris entre 0 et 100.

**13.** Procédé de synthèse selon la revendication 12, **caractérisé en ce que** le monomère vinylique carboxylé oligomérique est choisi parmi le polyitaconate, polycitraconate, et polymésaconate.

**14.** Procédé de synthèse selon l'une des revendications précédentes, **caractérisé en ce que** la base de l'étape a) est choisie parmi NaOH, KOH, $NH_4OH$ et leur combinaison.

**15.** Procédé de synthèse selon l'une des revendications précédentes, **caractérisé en ce que** la concentration massique de l'acide itaconique est comprise entre 30% et 150%, par rapport à la masse totale de précurseurs du polymère ou du copolymère, solvants et réactifs mis en oeuvre dans l'étape a).

Europäisches Patentamt
European Patent Office
Office européen des brevets

# RAPPORT DE RECHERCHE EUROPEENNE

Numéro de la demande
EP 24 20 4435

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | YONG ROK KWON: "Surface-crosslinking of itaconic acid-based superabsorbent polymer using a novel bio-based surface-crosslinker based on succinic acid", POLYMER-PLASTICS TECHNOLOGY AND MATERIALS, vol. 62, no. 8, 10 mars 2023 (2023-03-10), pages 1057-1066, XP093157403, ISSN: 2574-0881, DOI: 10.1080/25740881.2023.2189450 | 1-6, 10-12, 14,15 | INV. C08J3/075 C08F220/06 C08J3/24 |
| Y | * le document en entier * | 1-6, 10-12, 14,15 | |
| A | | 7,8,13 | |
| | ----- | | |
| X | HAECHAN KIM: "Enhancement of Gel Strength of Itaconic Acid-Based Superabsorbent Polymer Composites Using Oxidized Starch", POLYMERS, vol. 13, no. 17, 25 août 2021 (2021-08-25), page 2859, XP093157407, CH ISSN: 2073-4360, DOI: 10.3390/polym13172859 | 1-6, 10-12, 14,15 | |
| Y | * le document en entier * | 1-6, 10-12, 14,15 | |
| A | | 7,8,13 | |
| | ----- | | |
| | -/-- | | |

| | | | DOMAINES TECHNIQUES RECHERCHES (IPC) |
|---|---|---|---|
| | | | C08J A61L C08F |

Le présent rapport a été établi pour toutes les revendications

| Lieu de la recherche | Date d'achèvement de la recherche | Examinateur |
|---|---|---|
| Munich | 4 février 2025 | Vandoolaeghe, P |

1

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

page 1 de 5

Europäisches Patentamt
European Patent Office
Office européen des brevets

# RAPPORT DE RECHERCHE EUROPEENNE

Numéro de la demande
EP 24 20 4435

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JUNG SOO KIM: "The Influence of Monomer Composition and Surface-CrossLinking Condition on Biodegradation and Gel Strength of Super Absorbent Polymer", POLYMERS, vol. 13, no. 4, 23 février 2021 (2021-02-23), page 663, XP093157412, CH ISSN: 2073-4360, DOI: 10.3390/polym13040663 | 1,3,5,9, 10,12, 14,15 | |
| Y | * le document en entier * | 1,3,5,9, 10,12, 14,15 | |
| A | | 7,8,13 | |
| | ----- | | |
| X | US 2013/171737 A1 (WAY TUN-FUN [TW] ET AL) 4 juillet 2013 (2013-07-04) | 1,5,6, 10,12, 14,15 | |
| Y | * exemples 1-3, 6-8, 11-13, 16-18, 21-23; tableaux 1-A, 2-A, 2-B, 3-A, 3-B * * revendications 1-4, 19 * | 1,5,6, 10,12, 14,15 | DOMAINES TECHNIQUES RECHERCHES (IPC) |
| A | | 7,8,13 | |
| | ----- | | |
| | -/-- | | |

Le présent rapport a été établi pour toutes les revendications

1

| Lieu de la recherche | Date d'achèvement de la recherche | Examinateur |
|---|---|---|
| Munich | 4 février 2025 | Vandoolaeghe, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

Europäisches Patentamt
European Patent Office
Office européen des brevets

# RAPPORT DE RECHERCHE EUROPEENNE

Numéro de la demande
EP 24 20 4435

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | HYESUN CHOI: "Sustainable Bio-Based Superabsorbent Polymer: Poly(itaconic acid) with Superior Swelling Properties", ACS APPLIED POLYMER MATERIALS , vol. 4, no. 6 5 avril 2022 (2022-04-05), pages 4098-4108, XP093157411, ISSN: 2637-6105, DOI: 10.1021/acsapm.2c00021 Extrait de l'Internet: URL:https://pubs.acs.org/doi/pdf/10.1021/acsapm.2c00021 | 1,5,14, 15 | |
| Y | * le document en entier * | 1,5,14, 15 | |
| A | | 7,8,13 | |
| | ----- | | |
| Y | KR 2022 0072942 A (KOREA INST IND TECH [KR]) 3 juin 2022 (2022-06-03) | 9 | |
| A | * abrégé * * exemples 1, 2; tableaux 1, 2 * * revendications 1-3, 8, 11, 13 * | 1-8, 10-15 | **DOMAINES TECHNIQUES RECHERCHES (IPC)** |
| | ----- | | |
| Y | WO 2022/223884 A1 (DAITO KASEI EUROPE SAS [FR]) 27 octobre 2022 (2022-10-27) | 1-6, 9-12,14, 15 | |
| A | * page 6, alinéa 7 * * exemple 1 * * revendications 1-9 * | 7,8,13 | |
| | ----- | | |
| Y | JP 7 031943 B2 (KAO CORP) 8 mars 2022 (2022-03-08) * alinéa [0093] * | 5 | |
| | ----- | | |
| | -/-- | | |

Le présent rapport a été établi pour toutes les revendications

| Lieu de la recherche | Date d'achèvement de la recherche | Examinateur |
|---|---|---|
| Munich | 4 février 2025 | Vandoolaeghe, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

European Patent Office / Europäisches Patentamt / Office européen des brevets

# RAPPORT DE RECHERCHE EUROPEENNE

Numéro de la demande
EP 24 20 4435

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EL-HAMSHARY ET AL: "Synthesis and water sorption studies of pH sensitive poly(acrylamide-co-itaconic acid) hydrogels", EUROPEAN POLYMER JOURNAL, PERGAMON PRESS LTD OXFORD, GB, vol. 43, no. 11, 29 octobre 2007 (2007-10-29), pages 4830-4838, XP022318837, ISSN: 0014-3057, DOI: 10.1016/J.EURPOLYMJ.2007.08.018 * le document en entier * ----- | 1-15 | |
| A | WO 2016/087795 A1 (VALAGRO CARBONE RENOUVELABLE POITOU CHARENTES [FR]) 9 juin 2016 (2016-06-09) * revendications 1, 2, 10, 15 * ----- | 1-15 | |
| A | PARVIN NADERI: "Preparation of itaconic acid bio-based cross-linkers for hydrogels", PART A: PURE AND APPLIED CHEMISTRY, vol. 58, no. 3, 21 octobre 2020 (2020-10-21), pages 165-174, XP093157419, US ISSN: 1060-1325, DOI: 10.1080/10601325.2020.1836492 * le document en entier * ----- | 1-15 | DOMAINES TECHNIQUES RECHERCHES (IPC) |

-/--

Le présent rapport a été établi pour toutes les revendications

1

| Lieu de la recherche | Date d'achèvement de la recherche | Examinateur |
|---|---|---|
| Munich | 4 février 2025 | Vandoolaeghe, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

Europäisches Patentamt
European Patent Office
Office européen des brevets

# RAPPORT DE RECHERCHE EUROPEENNE

Numéro de la demande
EP 24 20 4435

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | YONG ROK KWON: "Itaconic-acid-based superabsorbent polymer with high gel strength and biocompatibility", POLYMER INTERNATIONAL , vol. 71, no. 9 22 janvier 2022 (2022-01-22), pages 1090-1098, XP093157409, GB ISSN: 0959-8103, DOI: 10.1002/pi.6367 Extrait de l'Internet: URL:https://onlinelibrary.wiley.com/doi/full-xml/10.1002/pi.6367 * le document en entier * ----- | 1-15 | |
| A | YONG-ROK KWON: "Effective Enhancement of Water Absorbency of Itaconic Acid Based-Superabsorbent Polymer via Tunable Surface-Crosslinking", POLYMERS, vol. 13, no. 16, 19 août 2021 (2021-08-19), page 2782, XP093157406, CH ISSN: 2073-4360, DOI: 10.3390/polym13162782 * le document en entier * ----- | 1-15 | DOMAINES TECHNIQUES RECHERCHES (IPC) |

Le présent rapport a été établi pour toutes les revendications

1

| Lieu de la recherche | Date d'achèvement de la recherche | Examinateur |
|---|---|---|
| Munich | 4 février 2025 | Vandoolaeghe, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................................
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 24 20 4435

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-02-2025

| Document brevet cité au rapport de recherche | Date de publication | Membre(s) de la famille de brevet(s) | Date de publication |
|---|---|---|---|
| US 2013171737 A1 | 04-07-2013 | TW 201328735 A | 16-07-2013 |
| | | US 2013171737 A1 | 04-07-2013 |
| KR 20220072942 A | 03-06-2022 | AUCUN | |
| WO 2022223884 A1 | 27-10-2022 | EP 4326225 A1 | 28-02-2024 |
| | | FR 3122180 A1 | 28-10-2022 |
| | | JP 2024518149 A | 25-04-2024 |
| | | WO 2022223884 A1 | 27-10-2022 |
| JP 7031943 B2 | 08-03-2022 | JP 7031943 B2 | 08-03-2022 |
| | | JP 2019019293 A | 07-02-2019 |
| WO 2016087795 A1 | 09-06-2016 | FR 3029525 A1 | 10-06-2016 |
| | | WO 2016087795 A1 | 09-06-2016 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 3029525